# FASCICULE DE BREVET EUROPEEN

(11) **EP 1 380 817 B1**
(45) Date de publication et mention de la délivrance du brevet: **14.03.2007**
(21) Numéro de dépôt: 03300053.0
(22) Date de dépôt: 08.07.2003
(51) Int. Cl.: G01F 3/08, G01F 15/12

(54) **Compteur volumetrique de fluide avec moyens d'evacuation de particules**
Flüssigkeitsvolumenzähler mit Mitteln zum Ausschleusen von Partikeln
Volumetric liquid meter with means for evacuation of particles

(30) Priorité: 09.07.2002 FR 0209000
(43) Date de publication de la demande: 14.01.2004
(73) Titulaire: Actaris S.A.S., 92120 Montrouge (FR)
(72) Inventeur: DEMIA, Laurent, 71000, MACON (FR); DROIN, Frédéric, 69400, Liergues (FR)
(74) Mandataire: Feray, Valérie

(56) Documents cités:
- WO-A-93/22631
- DE-A- 19 938 362
- GB-A- 287 143
- US-A- 5 576 489

## Description

L'invention se rapporte à un compteur volumétrique de fluide destiné à mesurer le débit d'un fluide s'écoulant dans une canalisation.

L'invention concerne plus particulièrement le domaine technique des compteurs volumétriques de fluide à piston oscillant dont la technique est bien connue par l'homme du métier.

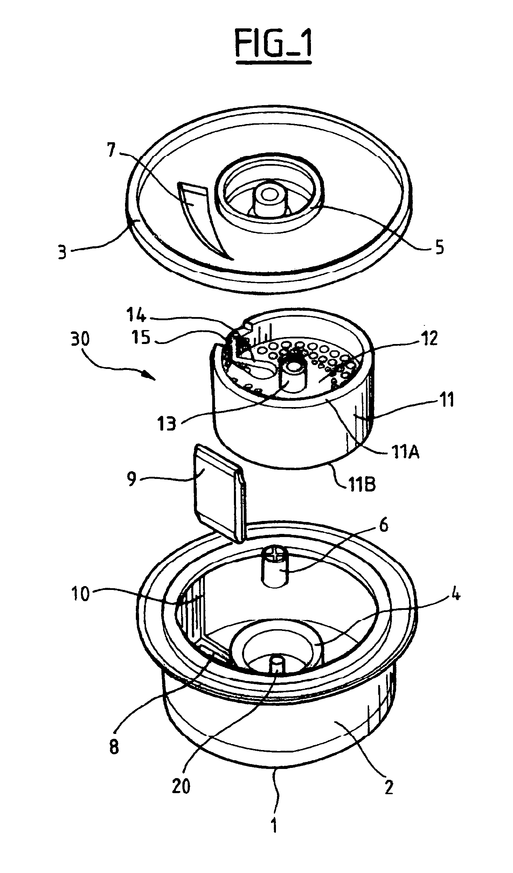

Un tel compteur connu comporte une boîte mesurante comme représenté sur la figure 1 en perspective éclatée.

Dans ce type de compteur, la boîte mesurante est l'élément essentiel dont dépend la précision de mesure du débit. La boîte mesurante est une chambre de forme cylindrique 30 qui comprend un fond 1, une paroi latérale 2 et un couvercle 3. Le fond 1 et le couvercle 3 comportent respectivement un cylindre inférieur 4 et supérieur 5, de même diamètre, ce diamètre étant inférieur à celui de la chambre. Les deux cylindres 4, 5 sont centrés sur l'axe de la chambre. Le cylindre inférieur comporte en son centre une tige métallique 28 sur laquelle vient s'emboîter un galet 6. Le fond et le couvercle sont munis d'au moins une ouïe d'entrée 7 et une ouïe de sortie 8 pour respectivement l'admission et l'évacuation du fluide dans la chambre. La chambre 30 comporte également une cloison fixe 9 de forme rectangulaire, séparant l'ouïe d'entrée 7 et l'ouïe de sortie 8. La cloison s'étend radialement entre la paroi latérale 2 et les cylindres inférieur 4 et supérieur 5 et axialement entre le fond 1 et le couvercle 3. Le fond, la paroi latérale, le couvercle et les cylindres inférieur et supérieur comportent une rainure 10 dans laquelle vient s'encastrer la cloison. Un piston 11 de forme cylindrique de diamètre inférieur à celui de la chambre mais supérieur aux diamètres des cylindres inférieur et supérieur est positionné de manière excentrique à l'intérieur de la chambre. Le piston 11 comporte à mi-hauteur une paroi plane 12 perforée de trous et supportant en son centre deux tétons 13, l'un dirigé vers le fond, l'autre vers le couvercle. La paroi comporte également une lumière 14 en forme de poire orientée radialement et positionnée de manière excentrique. La lumière en forme de poire débouche sur une fente 15 pratiquée sur toute la hauteur du piston.

Le compteur comportant une telle boîte mesurante fonctionne selon le principe de l'admission d'un volume donné de fluide par l'ouïe d'entrée 7 dans la chambre 30 qui en communiquant son énergie au piston provoque son déplacement en rotation et son évacuation vers l'ouïe de sortie 8. Ainsi, chaque révolution du piston 11 correspond au passage d'un volume de fluide donné. Le mouvement général du piston est un mouvement oscillant, l'axe du piston décrivant un cercle autour de l'axe de la chambre 30 et la fente 15 du piston glissant le long de la cloison 9. Le piston est guidé cinématiquement dans la chambre 30 grâce à l'engagement de la cloison 9 dans la fente verticale 15 et dans la lumière 14 en forme de poire ainsi que par l'engagement du téton 13 entre le galet 6 et le cylindre inférieur 4. La paroi plane du piston, bien que positionnée entre le cylindre inférieur 4 et supérieur 5, reste libre de se mouvoir dans un plan.

L'invention concerne donc un compteur volumétrique de fluide du type à piston oscillant comprenant une chambre cylindrique comportant une paroi latérale, un fond et un couvercle, ainsi qu'un piston de forme cylindrique disposé de façon excentrique et guidé cinématiquement dans la chambre, le piston effectuant un mouvement oscillant dans la chambre sous l'action du déplacement d'un volume de fluide et présentant des faces glissantes sur des parties fixes de la chambre.

Un problème particulier lié à ce type de compteur est leur mauvais comportement lors du comptage d'eau transportant des particules solides telles que des grains de sable. En effet, les jeux entre les différents éléments constituant la chambre sont tels qu'un simple grain de sable peut entraîner un blocage complet du mouvement du piston ou tout au moins une baisse significative des performances métrologiques au fil du temps. L'effet de ces particules solides est particulièrement sensible aux coins de la cloison fixe de séparation de l'ouïe d'entrée et de l'ouïe de sortie. Cette faiblesse exclut aujourd'hui cette technologie de comptage de nombreux marchés dans des zones géographiques où l'eau est dite « chargée ». De même, lors d'une intervention sur un réseau dans le cas d'une mise en service ou de travaux de maintenance, il se peut que l'eau contiennent des particules solides.

Le document WO93/22631 décrit une solution à ce problème. A cet effet, ce document décrit un compteur volumétrique comportant une rainure se trouvant sur la paroi de la chambre mesurante à proximité de la cloison fixe séparant l'ouïe d'entrée et l'ouïe de sortie, cette rainure permettant l'évacuation des particules solides se trouvant dans le fluide via un élargissement de la surface de l'ouïe de sortie sur lequel débouche la rainure. Cette rainure permet d'éviter une accumulation de particules se situant entre le diamètre extérieur du piston et le diamètre intérieur de la chambre de mesure.

Toutefois sa mise en oeuvre pose certaines difficultés dans la mesure où le débit d'évacuation des particules solides n'est pas toujours suffisant dans le cas d'une eau très « chargée ». En effet, l'évacuation des particules doit se faire par cette rainure de faible section, autorisant de ce fait un débit parfois insuffisant. Ce débit insuffisant peut entraîner une recirculation des particules ou un blocage des particules dans la rainure.

La présente invention vise à fournir un compteur volumétrique de fluide du type à piston oscillant offrant un meilleur débit d'évacuation des particules.

La présente invention propose à cet effet un compteur volumétrique de fluide du type à piston oscillant comprenant une chambre de mesure cylindrique incluant :
- une paroi latérale,
- un fond et un couvercle,
- un cylindre inférieur et supérieur de même diamètre inférieur au diamètre de ladite chambre,
- une ouïe d'entrée et une ouïe de sortie pour respectivement l'admission et l'évacuation du fluide dans ladite chambre,
- un piston de forme cylindrique disposé de façon excentrique et guidé cinématiquement dans ladite chambre, ledit piston effectuant un mouvement oscillant dans ladite chambre sous l'action du déplacement d'un volume de fluide,
- une cloison fixe séparant ladite ouie d'entrée et ladite ouie de sortie, ladite cloison s'étendant radialement entre ladite paroi latérale et lesdits cylindres inférieur et supérieur et axialement entre ledit fond et ledit couvercle,
ladite paroi latérale comportant au moins une cavité verticale à proximité de ladite cloison fixe,
caractérisé en ce que ladite cavité est distincte desdites ouïes d'entrée et de sortie et traverse ladite paroi latérale au moins partiellement sur la hauteur de ladite paroi.

Grâce à l'invention, l'évacuation des particules se fait sur au moins une partie de la hauteur de la chambre, entraînant ainsi un meilleur débit que dans le cas d'une évacuation se faisant uniquement par un élargissement de faible section de la surface de l'ouïe. Cette cavité permet d'évacuer les particules se situant entre le diamètre extérieur du piston et le diamètre intérieur de la chambre de mesure de façon plus efficace.

Selon un premier mode de réalisation, la cavité traversante est située du côté de l'ouïe de sortie par rapport à ladite cloison fixe.

Selon un deuxième mode de réalisation, la cavité traversante est située du côté de l'ouïe d'entrée par rapport à ladite cloison fixe.

De façon avantageuse, la cavité traversante est une fente verticale parallèle à l'arête verticale de ladite cloison fixe.

Avantageusement, ladite fente est tangente à ladite cloison fixe.

De manière avantageuse, ladite fente a une largeur inférieure ou égale à 3 mm.

Selon un troisième mode de réalisation, ladite paroi latérale comporte deux cavités traversantes chacune de part et d'autre de ladite cloison fixe.

Selon un mode de réalisation particulièrement avantageux, le compteur volumétrique comporte au moins une rainure verticale s'étendant au moins partiellement le long desdits cylindres inférieur et supérieur et en relation avec l'une desdites ouïes d'entrée ou de sortie, ladite rainure étant située à proximité de ladite cloison fixe.

Ainsi, le compteur permet d'éviter le blocage de particules solides entre le diamètre intérieur du piston et le diamètre extérieur des cylindres inférieur et supérieur de la chambre. Il permet également l'évacuation des particules par l'une des ouïes.

Avantageusement, ladite rainure est tangente à ladite cloison fixe.

Avantageusement, ladite rainure a une largeur inférieure ou égale à 2mm.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente une vue en perspective éclatée d'un compteur volumétrique à piston oscillant selon l'art antérieur,
- La figure 2 représente une vue en coupe verticale selon le plan AA tel que représenté sur la figure 3 d'un compteur volumétrique selon l'invention,
- La figure 3 représente un compteur volumétrique selon l'invention en vue de dessus sans le piston et le couvercle,
- La figure 4 représente un agrandissement en vue de dessus d'une première partie entourant la paroi fixe d'un compteur volumétrique selon l'invention,
- La figure 5 représente un agrandissement en vue de dessus d'une seconde partie entourant la paroi fixe d'un compteur volumétrique selon l'invention.

Dans toutes les figures, les éléments communs portent les mêmes numéros de référence.

La figure 1 a déjà été décrite en relation avec l'état de la technique.

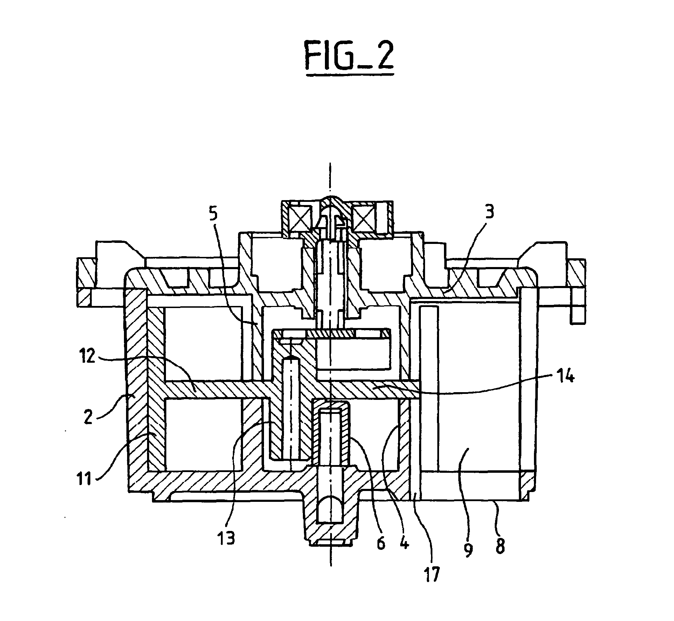

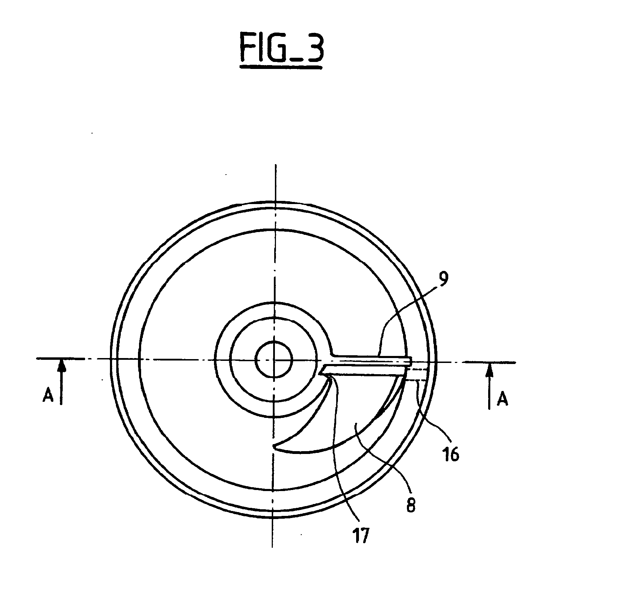

La figure 3 représente un compteur volumétrique selon l'invention en vue de dessus. La figure 2 représente une vue de ce même compteur volumétrique selon l'invention en coupe verticale selon le plan AA tel que représenté en figure 3.

Pour des raisons de clarté, le piston 11 et le couvercle 3 tels que représentés en figure 2 ont été volontairement omis sur la figure 3.

La paroi latérale 2 de la chambre mesurante comporte une fente verticale 16 traversant la paroi latérale 2. La fente verticale 16 est tangente à la cloison fixe 9 de séparation de l'ouïe d'entrée non représentée et de l'ouïe de sortie 8 et est située du côté de l'ouïe de sortie 8 par rapport à la cloison fixe 9, tel que représenté sur la figure 3. La largeur de la fente 16 est inférieure ou égale à 3 mm et sa hauteur est environ égale à la hauteur de la cloison fixe de séparation 9.

Le cylindre supérieur 5 comporte une rainure verticale 17 tangente à la cloison fixe 9 et se prolongeant sur le cylindre inférieur 4. La section de l'ouïe de sortie 8 est élargie de sorte que la rainure verticale 17 débouche sur cet élargissement. La rainure verticale 17 s'étend donc sur tout le long de la chambre de mesure.

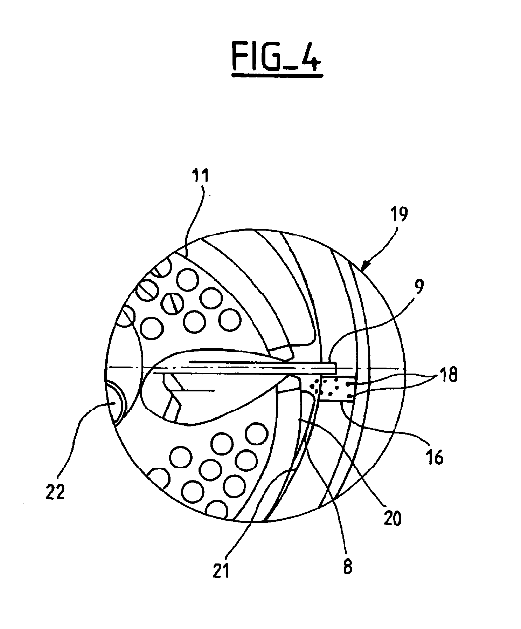

La figure 4 représente un agrandissement en vue de dessus d'une partie 19 entourant la paroi fixe 9 montrant le fonctionnement de la fente verticale 16 du compteur selon l'invention.

Pendant chaque admission d'un volume de fluide donné par l'ouïe d'entrée non représentée, l'axe 22 du piston 11 va décrire un mouvement circulaire complet entraînant un mouvement oscillant du piston 11 et l'évacuation du volume de fluide donné par l'ouïe de sortie 8. Dans le cas d'un fluide « chargé », ce dernier contient des particules solides 18 qui viennent se placer entre le diamètre extérieur 20 du piston 11 et le diamètre intérieur 21 de la chambre de mesure. Ces particules vont être évacuées via la fente 16, donc sur une hauteur environ égale à la hauteur de la cloison fixe de séparation 9. De plus, la faible largeur de cette fente 16 couplée à sa proximité de la cloison fixe 9 entraîne une fuite de fluide par cette fente 16 sans impact sur la métrologie du compteur. En effet, la faible largeur induit une faible perte et sa proximité de la cloison fixe 9 implique que l'évacuation des particules 18 se fait à un moment où la plus grande partie du volume de fluide donné a déjà été comptée, autrement dit, juste avant la fin d'une rotation complète de l'axe 22 du piston 11.

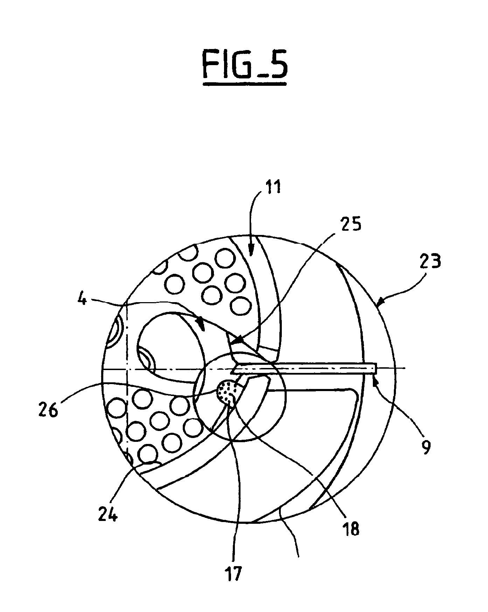

La figure 5 représente un agrandissement en vue de dessus d'une seconde partie 23 entourant la paroi fixe de séparation 9 montrant le fonctionnement de la rainure verticale 17 du compteur selon l'invention.

En présence d'un fluide « chargé », ce dernier contient des particules solides 18 qui viennent se placer entre le diamètre intérieur 24 du piston et le diamètre extérieur 25 des cylindres inférieur 4 et supérieur (non représenté) de la chambre de mesure. La rainure 17 qui se trouve à la fois sur les cylindres inférieur 4 et supérieur permet l'écoulement des particules 18.

La rainure 17 débouche sur un élargissement 26 de l'ouïe de sortie 8 qui permet l'évacuation des particules 18 s'écoulant le long de la rainure 17. La section de l'élargissement 26 est sensiblement identique à la section de la rainure 17, donc de faible section par rapport à la section de l'ouïe de sortie 8 afin de ne pas perturber la métrologie.

Bien entendu, l'invention n'est pas limitée au mode de réalisation qui vient d'être décrit.

Ainsi, même si la fente 16 et la rainure 17 sont utilisées dans un but commun consistant à évacuer les particules, la fente verticale peut être utilisée seule et permettre une évacuation efficace des particules solides.

De plus, la fente et la rainure telles que décrites dans le mode de réalisation ont été placées du côté de l'ouïe de sortie mais peuvent également être placées du côté de l'ouïe d'entrée.

En outre, on peut également prévoir une fente et une rainure de part et d'autre de la cloison fixe.

## Revendications

1. Compteur volumétrique de fluide du type à piston oscillant comprenant une chambre (30) de mesure cylindrique incluant :
- une paroi latérale (2),
- un fond (1) et un couvercle (3),
- un cylindre inférieur (4) et supérieur (5) de même diamètre inférieur au diamètre de ladite chambre (30),
- une ouïe d'entrée (7) et une ouïe de sortie (8) pour respectivement l'admission et l'évacuation du fluide dans ladite chambre (30),
- un piston (11) de forme cylindrique disposé de façon excentrique et guidé cinématiquement dans ladite chambre (30), ledit piston (11) effectuant un mouvement oscillant dans ladite chambre (30) sous l'action du déplacement d'un volume de fluide,
- une cloison fixe (9) séparant ladite ouie d'entrée (7) et ladite ouie de sortie (8), ladite cloison (9) s'étendant radialement entre ladite paroi latérale (2) et lesdits cylindres inférieur (4) et supérieur (5) et axialement entre ledit fond (1) et ledit couvercle (3), ladite paroi latérale (2) comportant au moins une cavité verticale (16) à proximité de ladite cloison fixe (9),
**caractérisé en ce que** ladite cavité (16) est distincte desdites ouïes d'entrée et de sortie et traverse ladite paroi latérale au moins partiellement sur la hauteur de ladite paroi (2).

2. Compteur volumétrique selon la revendication 1 **caratérisé en ce que** ladite cavité traversante (16) est située du côté de l'ouïe de sortie (8) par rapport à ladite cloison fixe (9).

3. Compteur volumétrique selon la revendication 1 **caractérisé en ce que** ladite cavité traversante (16) est située du côté de l'ouïe d'entrée (7) par rapport à ladite cloison fixe (9).

4. Compteur volumétrique selon l'une des revendications précédentes **caractérisé en ce que** ladite cavité traversante (16) est une fente verticale parallèle à l'arête verticale de ladite cloison fixe (9).

5. Compteur volumétrique selon la revendication précédente ca**caractérisé en ce que** ladite fente (16) est tangente à ladite cloison fixe (9).

6. Compteur volumétrique selon la revendication précédente **caractérisé en ce que** ladite fente (16) a une largeur inférieure ou égale à 3 mm.

7. Compteur volumétrique selon l'une des revendications précédentes **caractérisé en ce que** ladite paroi latérale (2) comporte deux cavités traversantes chacune de part et d'autre de ladite cloison fixe.

8. Compteur volumétrique selon l'une des revendications précédentes **caractérisé en ce qu**'il comporte au moins une rainure verticale (17) s'étendant le long desdits cylindres inférieur (4) et supérieur (5) et en relation avec l'une desdites ouïes d'entrée (7) ou de sortie (8), ladite rainure (17) étant située à proximité de ladite cloison fixe (9).

9. Compteur volumétrique selon l'une des revendications 8 ou 9 **caractérisé en ce que** ladite rainure verticale (17) est tangente à ladite cloison fixe (9).

10. Compteur volumétrique selon l'une des revendications 8 à 10 **caractérisé en ce que** ladite rainure verticale (17) a une largeur inférieure ou égale à 2 mm.

## Claims

1. Volumetric fluid meter of oscillating piston type comprising a cylindrical metering chamber (30) including:
- a side wall (2)
- a bottom part (1) and a cover (3)
- a lower (4) and upper (5) cylinder of the same diameter and of lesser diameter than said chamber (30),
- an inlet port (7) and an outlet port (8) for respective entry and evacuation of the fluid in said chamber (30),
- a piston (11) of cylindrical shape arranged eccentrically and guided kinematically in said chamber (30), said piston (11) having an oscillating movement in said chamber (30) under the action of the movement of a volume of fluid,
- a fixed partition (9) separating said inlet port (7) and said outlet port (8), said partition (9) extending radially between said side wall (2) and said lower (4) and upper (5) cylinders and axially between said bottom part (1) and said cover (3),
said side wall (2) comprising at least one vertical cavity (16) in the vicinity of said fixed partition (9),
**characterized in that** said cavity (16) is separate from said inlet and outlet ports and crosses said side wall at least over part of the height of said wall (2).

2. Volumetric meter as in claim 1, **characterized in that** said through cavity (16) is located on the side of the outlet port (8) with respect to said fixed partition (9).

3. Volumetric meter as in claim 1, **characterized in that** said through cavity (16) is located on the side of the inlet port (7) with respect to said fixed partition (9).

4. Volumetric meter as in any of the preceding claims, **characterized in that** said through cavity (16) is a vertical slot parallel to the vertical edge of said fixed partition (9).

5. Volumetric meter as in the preceding claim, **characterized in that** said slot (16) is tangent to said fixed partition (9).

6. Volumetric meter as in the preceding claim, **characterized in that** the width of said slot (16) is 3mm or less.

7. Volumetric meter as in any of the preceding claims, **characterized in that** said side wall (2) comprises two through cavities each on either side of said fixed partition.

8. Volumetric meter as in any of the preceding claims, **characterized in that** it comprises at least one vertical groove (17) extending along said lower (4) and upper (5) cylinders and communicating with one of said inlet (7) or outlet (8) ports, said groove (17) being positioned in the vicinity of said fixed partition (9).

9. Volumetric meter as in either of claims 8 or 9, characterize din that said vertical groove (17) is tangent to said fixed partition (9).

10. Volumetric meter as in any of claims 8 to 10, **characterized in that** said vertical groove (17) has a width of 2 mm or less.

## Patentansprüche

1. Flüssigkeits-Mengenmesser vom Typ mit Schwingkolben, eine zylindrische Messkammer (30) aufweisend, die einschließt:
- eine Seitenwand (2)
- einen Boden (1) und einen Deckel (3),
- einen unteren (4) und einen oberen (5) Zylinder mit demselben Durchmesser, der kleiner als der Durchmesser der besagten Kammer (30) ist,
- eine Eingangsöffnung (7) und eine Ausgangsöffnung (8) jeweils zum Einlassen und Auslassen der Flüssigkeit in die besagte Kammer (30),
- einen zylindrischen Kolben (11), der exzentrisch angeordnet ist und in der besagten Kammer (30) kinetisch geführt wird,
wobei der besagten Kolben (11) in der besagten Kammer (30) unter Einwirkung des sich verlagernden Flüssigkeitsvolumens eine schwingende Bewegung durchführt,
- eine starre Trennwand (9), welche die besagte Eingangsöffnung (7) und die besagte Ausgangsöffnung (8) trennt, wobei sich die besagte Trennwand (9) radial zwischen der besagten Seitenwand (2) dem besagten unteren (4) und oberen (5) Zylinder und axial zwischen dem besagten Boden (1) und dem besagten Deckel (3) erstreckt,
wobei die besagte Seitenwand (2) mindestens eine vertikale Vertiefung (16) in der Nähe der besagten starren Trennwand (9) aufweist,
**dadurch gekennzeichnet, dass** die besagte Vertiefung (16) von den besagten Eingangs- und Ausgangsöffnungen verschieden ist und die besagte Seitenwand mindestens teilweise auf der Höhe der besagten Wand (2) durchquert.

2. Mengenmesser nach Anspruch 1, **dadurch gekennzeichnet, dass** sich die besagte durchquerende Vertiefung (16) an der Seite der Ausgangsöffnung (8) in Bezug auf die besagte starre Trennwand (9) befindet.

3. Mengenmesser nach Anspruch 1, **dadurch gekennzeichnet, dass** sich die besagte durchquerende Vertiefung (16) an der Seite der Eingangsöffnung (7) in Bezug auf die besagte starre Trennwand (9) befindet.

4. Mengemesser nach einem der vorangehenden Ansprüche, **dadurch gekennzeichnet, dass** die besagte durchquerende Vertiefung (16) ein vertikaler Schlitz parallel zur vertikalen Kante der besagten starren Trennwand (9) ist.

5. Mengenmesser nach dem vorangehenden Anspruch, **dadurch gekennzeichnet, dass** der besagte Schlitz (16) die besagte starre Trennwand (9) berührt.

6. Mengenmesser nach dem vorangehenden Anspruch, **dadurch gekennzeichnet, dass** der besagte Schlitz (16) 3 mm breit oder schmaler ist.

7. Mengenmesser nach einem der vorangehenden Ansprüche, **dadurch gekennzeichnet, dass** die besagte Seitenwand (2) zwei durchquerende Vertiefungen umfasst, jede auf beiden Seiten der besagten starren Trennwand.

8. Mengenmesser nach einem der vorangehenden Ansprüche, **dadurch gekennzeichnet, dass** er mindestens eine vertikale Nut (17) umfasst, die sich entlang des besagten unteren (4) und oberen (5) Zylinders erstreckt und in Beziehung mit einer der besagen Eingangs- (7) oder Ausgangsöffnungen (8), wobei sich die besagte Nut (17) in der Nähe der besagten starren Trennwand (9) befindet.

9. Mengenmesser nach einem der Ansprüche 8 oder 9, **dadurch gekennzeichnet, dass** die besagte vertikale Nut (17) die besagte starre Trennwand (9) berührt.

10. Mengenmesser nach einem der Ansprüche 8 bis 10, **dadurch gekennzeichnet, dass** die besagte vertikale Nut (17) 2 mm breit ist oder schmaler.
